Europäisches Patentamt

European Patent Office

Office européen des brevets

(11) Publication number: **0 071 840**
A1

# (12) EUROPEAN PATENT APPLICATION

(21) Application number: **82106666.9**

(22) Date of filing: **23.07.82**

(51) Int. Cl.³: **B 29 H 17/16,** B 29 H 17/22

(30) Priority: **12.08.81 IT 6811781**

(43) Date of publication of application: **16.02.83**
**Bulletin 83/7**

(84) Designated Contracting States: **DE FR GB IT LU**

(71) Applicant: **THE FIRESTONE TIRE & RUBBER**
**COMPANY, 1200 Firestone Parkway, Akron,**
**Ohio 44317 (US)**

(72) Inventor: **Siegenthaler, Karl Jacob, Int. 22, Via dei**
**Pescatori C.R. Maison du Parc, 00100 Ostia (Roma) (IT)**

(74) Representative: **von Raffay, Vincenz, Dipl.-Ing.,**
**Patentanwälte Raffay, Fleck & Partner Postfach 32 32 17,**
**D-2000 Hamburg 13 (DE)**

(54) **Primary forming device for tire casings.**

㋝ A primary forming device (1) for the tire casings (2) in which a forming cylinder (9) is mounted on a single support shaft (8) and is provided with two half-drums (11, 12) slidably mounted with respect to the said shaft (8) and movable toward one another against the thrust of resilient means (52) interposed between them; each half-drum (11, 12) supporting externally a forming air chamber (64) having three lobes or compartments (65, 66, 67), in which all three lobes extend from a single bead (63) which can be secured in position on the associated half-drum, together with a bead (5) of the said casing (2) by expandable clamping means (62).

- 1 -

## PRIMARY FORMING DEVICE FOR TIRE CASINGS

The present invention relates to a primary forming device for tire casings.

The main object of the present invention is that of providing a primary forming device comprising an improved forming cylinder which can be substituted for the cylinders currently in use without involving any modifications to the support devices for the cylinder itself, normally constituted by a single solid shaft.

In particular, the object of the present invention is that of providing a primary forming device comprising a forming cylinder having slidable half-drums, and in which the control of the axial movement of the said half-drums does not require the use of axial controls necessarily including at least one hollow shaft co-axial with the said support shaft.

A further object of the present invention is that of providing a primary forming device, the forming cylinder of which is provided with half-drums supporting the forming air chambers and having an extremely simplified structure allowing the removal and replacement of the said air chambers in the quickest and simplest manner possible, and the forming air chambers of which are formed in such a way as to allow them to be mounted, dismounted and fixed in position.

- 2 -

0071840

These and other objects are achieved by the present invention in that it relates to a primary forming device for tire casings, characterized by the fact that it comprises, in combination, a central support shaft; and a forming cylinder keyed onto the said shaft and in turn comprising a hollow inner drum, two half-drums axially slidably mounted on the said inner drum and movable toward one another against the thrust of resilient means interposed between them, a forming air chamber having three lobes carried on the outside of each half-drum, the said air chamber including a single bead from which the said three lobes extend outwardly, and expandable securing means carried by each said half-drum for axially securing the associated said bead and a bead of the said casing in position.

The invention will now be described with reference to the attached drawings, in which;

Fig. 1 is an axial section of a primary forming device for tire casings in the uncured, green or raw state forming according to the principles of the present invention;

Fig. 2 is an exploded perspective view of a detail of Fig. 1; and

Figs. 3, 4 and 5 illustrate in axial section part of the cylinder of Fig. 1 in subsequent working phases.

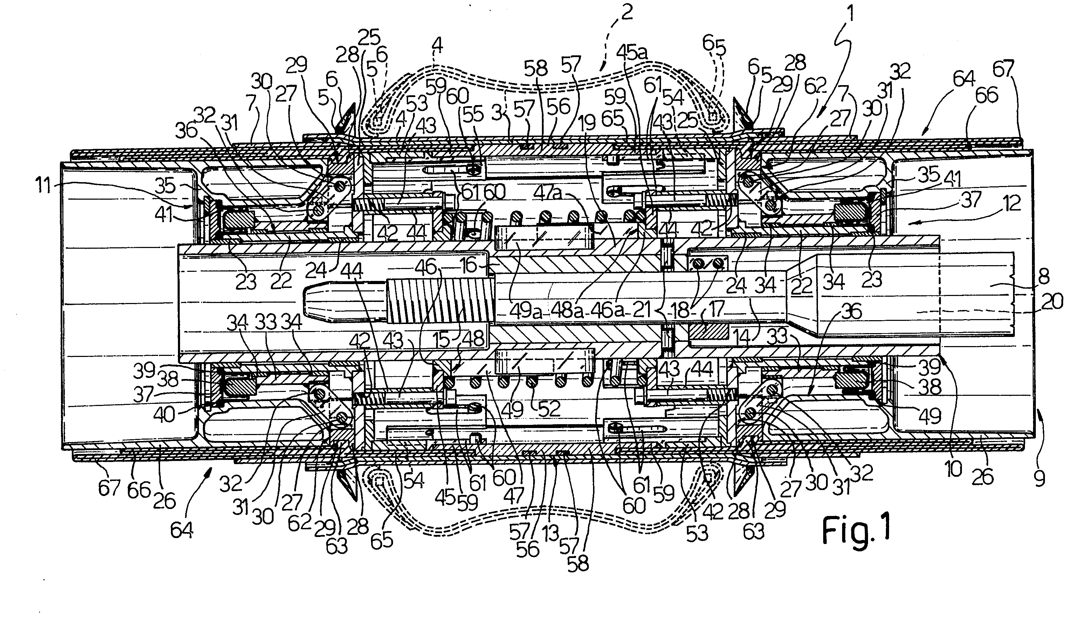

With reference to Fig. 1, a forming device for a green tire casing is generally indicated 1, the green tire casing 2 includes an inner layer 3 of outer cover, covered by a reinforced ply 4. In the casing 2 the axially opposite ends of the layer 3 and the layer 4 are each folded outwardly about an annular metal bead 5 and a filling rib or apex 6 rigidly connected to the bead 5, and are externally covered by a respective layer or sidewall 7.

The device 1 includes a support shaft 8 on which is keyed a forming cylinder 9 comprising an inner hollow drum 10 and two half-drums 11, 12 of toroidal form axially slidably mounted on the inner drum 10 and connected together by an intermediate cylindrical body 13, the ends of which are supported by the two half-drums 11, 12.

In particular, as illustrated in Fig. 1, the shaft 8 includes an end section 14 provided with a threaded end 15 on which can be screwed a ring nut (not illustrated) for axially securing a tubular sleeve 16. The latter is fitted over the section 14 in contact with a radially split ring 17 and adjustably secured in position on the section 14 by means of screws 18.

The outer surface of the sleeve 16 is arranged in contact with the inner surface of an intermediate portion 19 of a tubular body 20 co-axial with the shaft 8 and forming part of the drum 10 together with the sleeve 16 to which it is rigidly connected by means of radial pins 21.

The two half-drums 11, 12 are disposed on the inner drum 10 on opposite sides of the intermediate portion 19 of the tubular body 20 and are substantially identical to one another so that in the following description only the half-drum 11 will be described.

The half-drum 11 comprises an inner tubular support 22 co-axial with the inner drum 10 and coupled in a rotatable and axially slidable manner to the outer surface thereof by means of the interposition of two annular shoes 23, 24.

From the axially inner end of the tubular support 22 there extends radially outwardly an annular flat wall 25 to the outer axial surface of which there is rigidly connected the inner axial end of a tubular body 26 extending axially outwardly of the tubular support 22 and co-axial thereto.

The outer axial surface of the wall 25 and the inner axial end of the tubular body 26 define between them radial chambers 27 along each of which there is slidably mounted a piston 28 in the form of a circular sector provided with an outer groove 29. Each piston 28 is pivotally connected, by means of a pin 30, to the end of a link rod 31, the other end of which is connected pivotally by means of a pin 32 to the end of a tubular body 33, the inner surface of which is coupled in an axially slidable manner to the outer surface of the tubular support 22 by means of the interposition of two annular sliding shoes 34 and an axial key not illustrated.

From the inner surface of the tubular body 26 there extends inwardly a tubular rib 35, an inner wall of which is located facing the tubular support 22 and defines with this latter a toroidal chamber 36 housing the tubular body 33 and closed at its outer end by an annular plate 37. The chamber 36 defines a cylinder within which there is slidably mounted an annular piston 38 rigidly connected to the outer axial end of the tubular body 33 and operated by a resilient diaphragm 39. The latter is of annular form and is mounted with its inner periphery clamped between the annular plate 37 and the outer axial end of the tubular support 22, and with its outer periphery clamped between the annular plate 37 and an annular shoulder 40 of the rib 35 in such a way as to define with annular plate 37 an annular chamber 41, the volume of which can be varied by admitting, for example, compressed air from a source not illustrated.

Through the annular wall 25 there are formed a plurality of uniformly distributed threaded holes 42 each engaged by an associated threaded pin 43 parallel to the shaft 8 and supporting an associated tubular spacer 44 which can be replaced with tubular spacers of different length and secured by the associated pin 43 between the wall 25 and an annular flange 45 extending outwardly from a ring 46. From the inner axial surface of the latter there extends an axial projection 47 constituted by a semicylindrical bush portion provided with an axial slit 48 slidably engaged by a key 49 lodged in an outer axial recess of the tubular body 20. The projection 47 has moreover an axial slot 50 slidably engaged by a key 51 carried by the tubular body 20 to limit the outward stroke of the projection 47. For the purpose of facilitating the understanding of the structure illustrated in Fig. 1 the flange 45, the ring 46, the projection 47, the slit 48, the keys or coupling means 49 and 51 and the slot 50 of the half-drum 12 are distinguished by the suffix a.

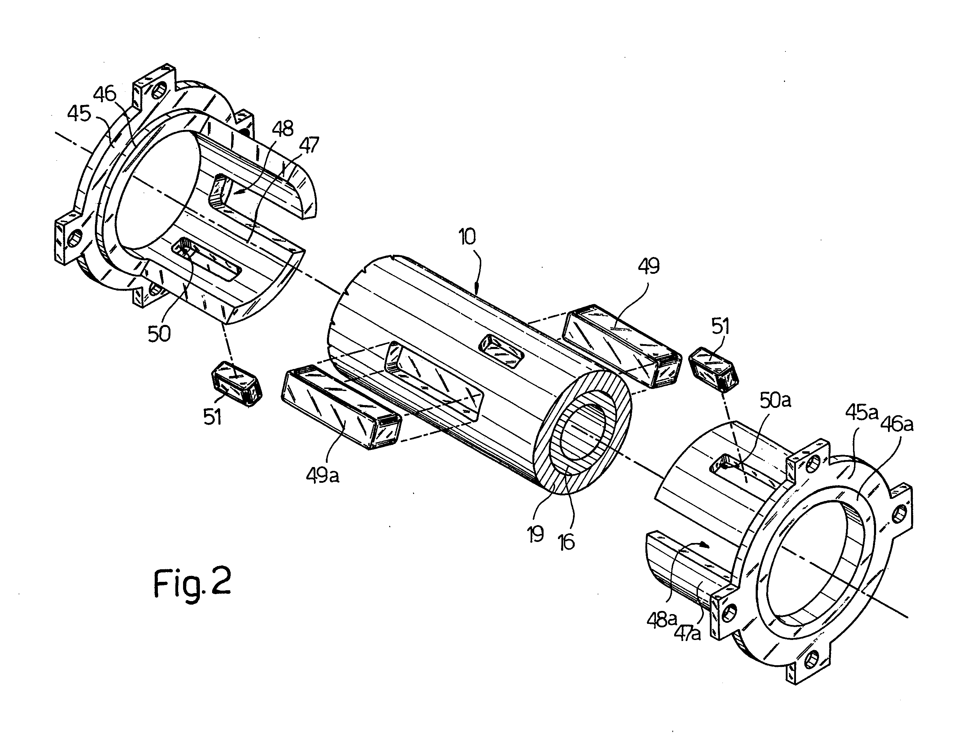

As illustrated in Figs. 1 and 2, the keys 49 and 49a are arranged in diametrically opposite positions, and the projections 47 and 47a extend around the tubular body 20 along arcs of circles complementary to one another in such a way as not to impede the sliding of the rings 46 and 46a toward one another against the thrust of a helical spring 52 mounted compressed between the flanges 45 and 45a in positions co-axial to the tubular body 20.

The half-drum 11 finally includes a tubular wall 53 extending axially inwardly from the outer periphery of the annular wall 25 and has an outer diameter slightly greater than that of the tubular body 26.

To the tubular wall 53 there is connected a tubular body 54 having inwardly extending axial projections 55, which is replaceable with similar tubular bodies having projections 55 of different dimensions. The projections 55 have an outer diameter substantially identical to that of the tubular body 26 and support one end of the intermediate cylindrical body 13. The latter is constituted by a plurality of staves 56 held together by outer resilient elements 57 and including an intermediate portion 58 and two end portions 59 of reduced thickness coupled slidably to the outer surface of the projections 55.

From each stave 56, which is replaceable with a stave 56 of different length, project inwardly radial pins 60 some of which are engaged axially and transversley slidable through respective grooves 61 formed axially along the projections 55.

The sectors 28 constitute, as an assembly, an expandable ring 62 which can clamp to the inside of its groove 29 an inner annular bead 63 of a three lobe air chamber generally indicated 64 and comprising an inner annular chamber 65, an outer annular chamber 66 and an intermediate annular chamber 67 extending radially outwardly from the bead 63 and the intermediate chamber 67 and outer chamber 66 of which have a common wall section 68.

As illustrated in Fig. 1, the chambers 65, 66 and 67 are extended in the deflated configuration, the first axially inside the bead 63 between the latter and the intermediate portions of the staves 56, the second axially outwardly of the bead 63 in contact with the outer surface of the tubular body 26, and the third above the second in a substantially coplanar position with respect to the first.

In use the forming cylinder 9 is disposed, at the commencement of working, in the extended configuration illustrated in Fig. 1 with the keys 51 and 51a in contact with the inner axial ends of the associated axial slots 50 and 50a in such a way as to prevent the two half-drums 11 and 12 from becoming separated from one another further than the separation due to the thrust of the spring 52.

Once the spacers 44, the tubular bodies 54 and the staves 56 of the length corresponding to the form of the casing 2 which it is intended to obtain have been mounted, an operator extends the inner cover layer 3 in contact with the outer surfaces of the cylinder 9 covering it with the ply 4 and arranging each end of the assembly 3, 4 beneath an associated sidewall 7.

- 7 -

0071840

As illustrated in Fig. 1, the assembly 3, 4 entirely covers the two inner annular chambers 65 disposed, flattened, outside the tubular wall 53, substantially coplanar with the outer cylindrical surface of the intermediate portions 58 of the staves 56 of the intermediate cylindrical body 13.

Subsequently there are mounted on the forming cylinder 9 the two beads 5 and the associated rib 6 rigidly connected thereto, the beads 5 being arranged on the outside of the assembly 3, 4 and each in correspondence with a ring 62.

By admitting air under pressure into the interior of the chamber 4 the operator causes radial outward displacement of the sectors 28 with the dual result of clamping the two beads 63 within the associated grooves 29 and of axially securing the beads 5 on the associated half-drums 11 and 12.

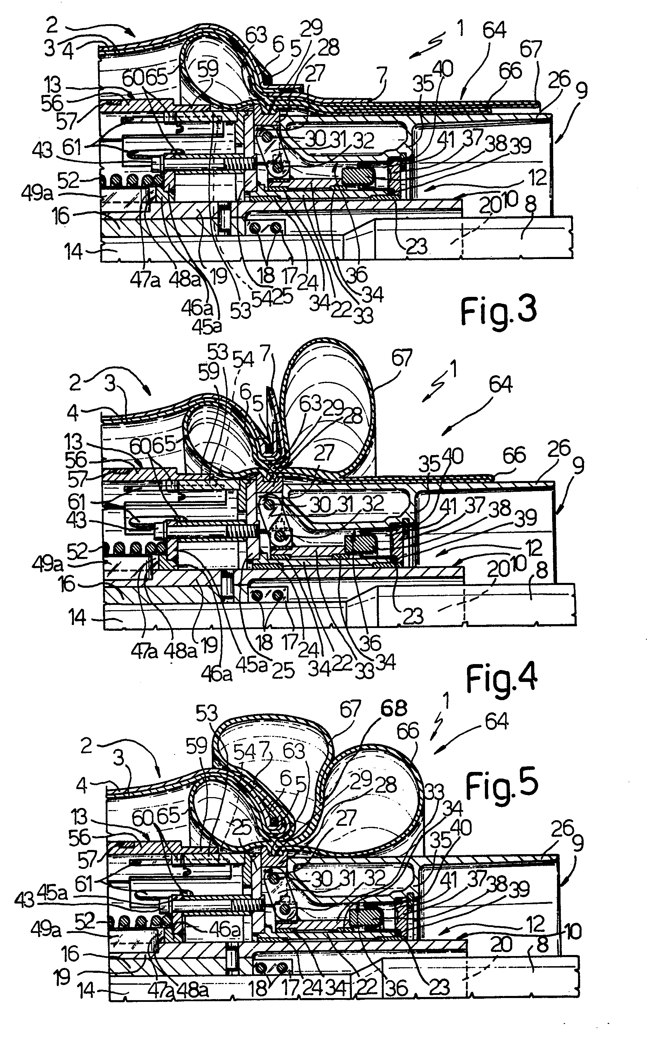

Air under pressure is then supplied to the interior of the inner annular chamber 65 which, upon inflating, presses outwardly (see Fig. 3), the assembly 3, 4 bringing it up to the inner axial surface of the filling rib 6. Obviously, the outward swelling of the assembly 3, 4 involves a shortening of the axial length of the sleeve constituted by the assembly 3, 4 with the consequence that the two half-drums 11 and 12 are displaced by the assembly 3, 4 itself towards one another against the thrust of the spring 52 until the keys 49 and 49a are carried into contact with the bottoms of the associated slots 48 and 48a.

The axial displacement of the half-drums 11 and 12 towards the intermediate cylindrical body 13 automatically involves a radial expansion of this against the action of the resilient elements 57. In particular, each stave 56 is displaced outwardly in such a way as to permit each end portion 59 thereof to be displaced in contact with the outer surface of the associated tubular wall 53.

Subsequently, as is illustrated in Figs. 4 and 5, compressed air is supplied to the two intermediate chambers 67 and, simultaneously or immediately subsequently, to the two outer chambers 66.

The intermediate chamber 67, upon inflating, causes (Fig. 4) the upward folding of the associated sidewall 7 which is subsequently further folded until coming into contact with the outer axial surface of the associated rib 6 by the action of the outer chamber 66 which, upon inflating (Fig. 5) causes rolling of the associated intermediate chamber 67 over and outwardly of the associated sidewall 7.

The chambers 65, 66 and 67 and the chambers 41 are then deflated permitting the two half-drums 11 and 12 to return to the initial position sliding, under the action of the spring 52, beneath the beads 5 left free by the piston sectors 28.

- 9 -

0071840

CLAIMS

1. A primary forming device for tire casings, characterized by the fact that it comprises, in combination a central support shaft; and a forming cylinder keyed on the said shaft and in turn comprising a hollow inner drum, two half-drums axially slidably mounted on the said inner drum and movable towards one another against the thrust of resilient means 52 interposed between them, a forming air chamber having three compartments carried on the outside of each half-drum, the said air chamber including a single bead from which the said three compartments extend outwardly, and expandable clamping means carried by each said half-drum for axially securing in position the associated said bead and an associated bead of the said casing.

2. A device according to Claim 1, characterized by the fact that each said half-drum includes an outer tubular body and an inner tubular body defining between them an annular chamber; the said expandable clamping means comprising an annular body constituted by a plurality of independent sectors radially movable with respect to the said inner and outer tubular bodies, an annular piston axially movable along the said annular chamber and link means extending between the said annular piston and each said sector.

3. A device according to Claim 2, characterized by the fact that the said annular piston is connected to actuating means including a chamber and having a variable volume defined by a resilient diaphragm of annular form.

4. A device according to Claim 2 or Claim 3, characterized by the fact that each said inner tubular body is rotatably and axially slidably coupled to the said inner drum; coupling means being carried by the latter for

0071840

preventing the rotation of each said inner tubular body along the said inner drum under the thrust of the said resilient means.

5. A device according to Claims 1, 2 or 3, characterized by the fact that each said air chamber comprises three axially adjacent annular compartments arranged with one in an intermediate position with respect to the other two; the said intermediate compartment having a wall section in common with one of the other two lobes.

0071840

Fig.1

Fig.2

Fig.3

Fig.4

Fig.5

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | US-A-4 226 656  (GOOD YEAR) | 1-3,5 | B 29 H   17/16 |
| | --- | | B 29 H   17/22 |
| Y | DE-A-2 225 851   (PHOENIX) | 1-3,5 | |
| | --- | | |
| Y | US-A-3 816 218   (GOODYEAR) | 1-3 | |
| | --- | | |
| Y | US-A-4 010 058   (GOODYEAR) | 1,2 | |
| | --- | | |
| Y | US-A-3 784 437   (GOODYEAR) | 1,5 | |
| | ----- | | |

TECHNICAL FIELDS
SEARCHED (Int. Cl. 3)

B 29 H

The present search report has been drawn up for all claims

| Place of search | Date of completion of the search | Examiner |
|---|---|---|
| THE HAGUE | 06-09-1982 | DECLERCK J.T. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82